# EUROPEAN PATENT APPLICATION

(11) **EP 4 738 447 A1**
(43) Date of publication of application: **06.05.2026**
(21) Application number: 23943013.5
(22) Date of filing: 30.06.2023
(51) Int. Cl.: H01M 4/13, H01M 10/0525

(54) **ELECTRODE SHEET, ELECTROCHEMICAL DEVICE, AND ELECTRIC DEVICE**

(71) Applicant: Ningde Amperex Technology Limited, Ningde, Fujian 352100 (CN)
(72) Inventor: CHEN, Tengteng, Ningde, Fujian 352100 (CN)
(74) Representative: Kraus & Lederer PartGmbB
(86) International application number: PCT/CN2023/105201
(87) International publication number: WO 2025/000518

(57) **Abstract**

This application discloses an electrode plate, an electrochemical device, and an electrical device. The electrode plate includes a base portion and a tab. The base portion includes a first edge connected to the tab. The tab includes an extension portion and a connecting portion. Along a length direction of the electrode plate, the extension portion includes a first side edge and a second side edge disposed opposite to each other. The connecting portion includes a third side edge and a fourth side edge disposed opposite to each other. A first connection point is formed between the third side edge and the first side edge. A third connection point is formed between the third side edge and the first edge. A second connection point is formed between the fourth side edge and the second side edge. A fourth connection point is formed between the fourth side edge and the first edge. An extension line of the first side edge intersects the first edge at a first intersection point. An angle between a ray from the first intersection point to the first connection point and a ray from the first intersection point to the fourth connection point is α₁, satisfying: α₁ < 90°. With a line of connection from the first connection point to the third connection point serving as a first reference line, the connecting portion includes a first reinforcing region defined by the third side edge and the first reference line. This application alleviates the problems of bending and tearing of the tab.

## Description

### TECHNICAL FIELD

This application relates to the technical field of energy storage, and in particular, to an electrode plate, an electrochemical device, and an electrical device.

### BACKGROUND

For the battery with a multi-tab structure, the current can be led out through a plurality of tabs to greatly shorten a conduction path of electrons in an electrode plate, so that it can meets the requirement of high rate usage of the electrical devices, such as mobile phones, laptops, unmanned aerial vehicles, electric tools, electric vehicles, and electric two-wheelers, and therefore, has been widely used.

### SUMMARY

However, the inventor of this application finds through research that existing electrode plates with a multi-tab structure are prone to bending and inward insertion during the production and winding, thereby affecting the production yield rate severely. In addition, the batteries with a multi-tab structure pose higher risk of tearing the tab during an impact caused by factors such as dropping, thereby affecting the normal use of electrical device.

In view of the above situation, this application provides an electrode plate, an electrochemical device, and an electrical device to alleviate the phenomena of bending and inward insertion of the tab during production, improve the production yield rate of the electrochemical device, reduce the risk of tearing the tab at the root of the tab during an impact caused by factors such as dropping of the electrochemical device, and improve the reliability of the electrochemical device in use.

According to a first aspect, this application provides an electrode plate. The electrode plate includes a base portion and a tab. Along a length direction of the electrode plate, the base portion includes a first edge connected to the tab. The tab includes an extension portion and a connecting portion. Along the length direction of the electrode plate, the extension portion includes a first side edge and a second side edge disposed opposite to each other. The connecting portion is located between the base portion and the extension portion. Along the length direction of the electrode plate, the connecting portion includes a third side edge and a fourth side edge disposed opposite to each other. The third side edge is connected to the first edge and the first side edge. The fourth side edge is connected to the first edge and the second side edge. A first connection point is formed between the third side edge and the first side edge. A second connection point is formed between the fourth side edge and the second side edge. A third connection point is formed between the third side edge and the first edge. A fourth connection point is formed between the fourth side edge and the first edge. When viewed along a thickness direction of the tab, an extension line of the first side edge intersects the first edge at a first intersection point. The first intersection point is located between the third connection point and the fourth connection point. An angle between a ray from the first intersection point to the first connection point and a ray from the first intersection point to the fourth connection point is α₁, satisfying: α₁ < 90°. When viewed along the thickness direction of the tab, with a line of connection from the first connection point to the third connection point serving as a first reference line, the connecting portion includes a first reinforcing region. The first reinforcing region is defined by the third side edge and the first reference line.

By setting the angle to satisfy α₁ < 90°, the first side edge of the tab is tilted. By disposing the first reinforcing region between the third side edge and the first reference line, the first-side swing stiffness and torsional stiffness of the tab are improved, thereby suppressing the bending and inward insertion of the tab during production and winding, improving the production yield rate of the electrochemical device, and also reducing the risk of tearing the tab at the root of the tab during an impact caused by factors such as dropping of the electrochemical device, and consequently improving the reliability of the electrochemical device in use.

In some embodiments, the third side edge includes a fifth side edge and a sixth side edge. The fifth side edge is connected to the first side edge. The sixth side edge is connected to the first edge. An angle between the fifth side edge and the sixth side edge is δ₁, satisfying 90° < δ₁ < 180°. In this way, the first reinforcing region assumes an obtuse-angle structure, thereby improving the swing stiffness and torsional stiffness of the tab, further suppressing the bending and inward insertion of the tab during production and winding, improving the production yield rate of the electrochemical device, further reducing the risk of tearing the tab at the root of the tab during an impact caused by factors such as dropping of the electrochemical device, and improving the reliability of the electrochemical device in use.

In some embodiments, the electrode plate satisfies: 180° - α₁ < δ₁. In this way, the obtuse angle of the outer contour of the first reinforcing region is enlarged, thereby further improving the swing stiffness and torsional stiffness of the tab.

In some embodiments, the third side edge includes a fifth side edge and a sixth side edge. A fifth connection point is formed between the fifth side edge and the sixth side edge. The fifth side edge is connected to the first side edge. The sixth side edge is connected to the first edge. An angle between a ray from the third connection point to the fifth connection point and a ray from the third connection point to the fourth connection point is β₁, satisfying β₁ ≤ α₁ < 90°, and/or 60° ≤ β₁ ≤ 90°. In this way, the stiffness of the connecting portion of the tab is improved, and the swing and torsion of the tab are suppressed more effectively, thereby improving the production yield rate of the electrochemical device, reducing the risk of tearing the tab at the root of the tab during an impact caused by factors such as dropping of the electrochemical device, and improving the reliability of the electrochemical device in use.

In some embodiments, along a width direction of the electrode plate, a height of the tab is H, and a height of the connecting portion is h, satisfying: h/H ≥ 1/5.

In some embodiments, when viewed along the thickness direction of the tab, an extension line of the second side edge intersects the first edge at a second intersection point. The second intersection point is located between the third connection point and the fourth connection point. An angle between a ray from the second intersection point to the second connection point and a ray from the second intersection point to the third connection point is α₂, satisfying: α₂ < 90°. When viewed along the thickness direction of the tab, with a line of connection from the second connection point to the fourth connection point serving as a second reference line, the connecting portion further includes a main region and a second reinforcing region. The main region is located between the first reference line and the second reference line. The second reinforcing region is defined by the fourth side edge and the second reference line.

In the above embodiment, by setting the angle to satisfy α₂ < 90°, the second side edge of the tab is tilted. By disposing the second reinforcing region between the fourth side edge and the second reference line, the second-side swing stiffness and torsional stiffness of the tab are improved, thereby further suppressing the bending and inward insertion of the tab during production and winding, improving the production yield rate of the electrochemical device, and also reducing the risk of tearing the tab at the root of the tab during an impact caused by factors such as dropping of the electrochemical device, and consequently further improving the reliability of the electrochemical device in use.

In some embodiments, the fourth side edge includes a seventh side edge and an eighth side edge. A sixth connection point is formed between the seventh side edge and the eighth side edge. The seventh side edge is connected to the second side edge. The eighth side edge is connected to the first edge. An angle between the seventh side edge and the eighth side edge is δ₂, satisfying: 90° < δ₂ < 180°. In this way, the second reinforcing region assumes an obtuse-angle structure, thereby improving the second-side swing stiffness and torsional stiffness of the tab, further suppressing the bending and inward insertion of the tab during production and winding, improving the production yield rate of the electrochemical device, further reducing the risk of tearing the tab at the root of the tab during an impact caused by factors such as dropping of the electrochemical device, and improving the reliability of the electrochemical device in use.

In some embodiments, an angle between a ray from the fourth connection point to the sixth connection point and a ray from the fourth connection point to the third connection point is β₂, satisfying: β₂ ≤ α₂ < 90°, and/or 60° ≤ β₂ ≤ 90°. In this way, the stiffness of the connecting portion of the tab is improved, and the swing and torsion of the tab are suppressed more effectively, thereby improving the production yield rate of the electrochemical device, reducing the risk of tearing the tab at the root of the tab during an impact caused by factors such as dropping of the electrochemical device, and improving the reliability of the electrochemical device in use.

In some embodiments, a distance between the first intersection point and the second intersection point is L, and a distance between the third connection point and the fourth connection point is L₁, satisfying: L₁ ≥ 1.1 × L. In this way, the swing stiffness and torsional stiffness of the tab are improved, thereby improving the production yield rate of the electrochemical device, reducing the risk of tearing the tab at the root of the tab during an impact caused by factors such as dropping of the electrochemical device, and improving the reliability of the electrochemical device in use.

In some embodiments, the electrode plate satisfies: 180° - α₂ < δ₂. In this way, the obtuse angle of the outer contour of the second reinforcing region is enlarged, thereby further improving the swing stiffness and torsional stiffness of the tab.

In some embodiments, the third side edge includes at least one of a fold line or an arc line.

In some embodiments, the fourth side edge includes at least one of a fold line or an arc line.

In some embodiments, the base portion includes a current collector and a first active material layer. The first active material layer is disposed on a surface of the current collector.

In some embodiments, the electrode plate is a negative electrode plate. The negative electrode plate further includes a second active material layer. The second active material layer is disposed on a surface of the connecting portion. This arrangement further improves the stiffness of the tab connecting portion, thereby further suppressing the bending and tearing of the tab.

In some embodiments, the electrode plate is a positive electrode plate. The positive electrode plate further includes a first insulation layer. The first insulation layer is disposed on a surface of the connecting portion. This arrangement further improves the stiffness of the tab connecting portion, thereby further suppressing the bending and tearing of the tab.

According to a second aspect, this application provides an electrochemical device. The electrochemical device includes a wound type electrode assembly. The electrode assembly includes the electrode plate disclosed in any one of the above embodiments. In the above electrode plate, the swing stiffness and torsional stiffness of the tab are improved, thereby reducing the risk of tearing the tab at the root of the tab during an impact caused by factors such as dropping of the electrochemical device, and consequently improving the reliability of the electrochemical device in use.

According to a third aspect, this application provides an electrical device. The electrical device includes the electrochemical device disclosed in the above embodiment.

### BRIEF DESCRIPTION OF DRAWINGS

FIG. 1 is a schematic diagram of an electrical device according to an embodiment of this application.
FIG. 2 is a schematic diagram of an electrode assembly according to an embodiment of this application;
FIG. 3 is a front view of an electrode plate in an unwound state according to an embodiment of this application;
FIG. 4 is a side view of an electrode plate in an unwound state according to an embodiment of this application;
FIG. 5 is a schematic diagram of a base portion and a tab according to an embodiment of this application;
FIG. 6 is a partial view of a connecting portion with a first reinforcing region displayed according to an embodiment of this application;
FIG. 7 is a partial view of a connecting portion with a second reinforcing region displayed according to an embodiment of this application;
FIG. 8 is a schematic diagram of a base portion and a trapezoidal tab in the related art;
FIG. 9 is a schematic diagram of a base portion and a tab according to another embodiment of this application;
FIG. 10 is a schematic diagram of a base portion and a tab according to still another embodiment of this application;
FIG. 11 is a schematic diagram of a base portion and a tab according to yet another embodiment of this application; and
FIG. 12 is a schematic diagram of a base portion and a tab according to yet another embodiment of this application.

### List of reference signs:

electrode plate 10
current collector 10a
first active material layer 10b
second active material layer 10c
first insulation layer 10d
second insulation layer 10e
base portion 11
first edge 111
first intersection point 111a
second intersection point 111b
tab 12
extension portion 121
first side edge 1211
second side edge 1212
first reference line 121a
second reference line 121b
connecting portion 122
third side edge 1221
fourth side edge 1222
fifth side edge 1223
sixth side edge 1224
seventh side edge 1225
eighth side edge 1226
first reinforcing region 122a
second reinforcing region 122b
first connection point 12a
second connection point 12b
third connection point 12c
fourth connection point 12d
fifth connection point 12e
sixth connection point 12f
positive tab 1201
negative tab 1202
electrode assembly 101
electrochemical device 100
device body 200
electrical device 1000
trapezoidal tab 12'
length direction of electrode plate X
width direction of electrode plate Y
thickness direction of tab Z

### DETAILED DESCRIPTION

The following describes the technical solutions in some embodiments of this application with reference to drawings. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. The terms such as "top", "bottom", "up", "down", "left", "right", "front", and "back" and other similar expressions used herein are merely for ease of description.

The terms "first", "second" and the like are merely intended to distinguish between different items but not intended to indicate or imply relative importance or implicitly specify the number of the indicated technical features, specific order, or order of precedence.

The term "parallel" is a description of an ideal state between two components. In an actual production or use state, one component may be approximately parallel to another component. The two components described as "parallel" may be not absolute straight lines or planes, but may be roughly straight lines or planes. An object is considered to be a "straight line" or "plane" if the overall extension direction of the object is a straight line or plane as viewed from a macro perspective.

It is appreciated that the dimensions and thicknesses of each member shown in the drawings are specified for ease of understanding and description. This application is not limited to the dimensions and thicknesses shown in the drawings.

Unless otherwise defined, all technical and scientific terms used herein bear the same meanings as what is normally understood by a person skilled in the technical field of this application. The terms used in the specification of this application are merely intended to describe specific embodiments but not to limit this application.

The following describes some embodiments of this application with reference to drawings. To the extent that no conflict occurs, the following embodiments and the features in the embodiments may be combined with each other.

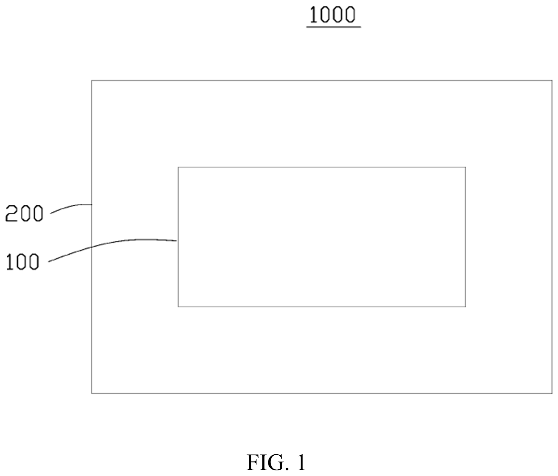

Referring to FIG. 1, some embodiments of this application provide an electrical device 1000. The electrical device 1000 includes an electrochemical device 100.

In some embodiments, referring to FIG. 1, the electrical device 1000 further includes a device body 200. The electrochemical device 100 is mounted in the device body 200.

In some embodiments, the electrical device 1000 may be a mobile phone, a laptop computer, a tablet computer, an unmanned aerial vehicle, an electrical tool, an electrical toy, a game console, a video recorder, a portable recorder, a radio, a smart watch, an electric vehicle, an electric two-wheeler, or the like, which are not enumerated here exhaustively.

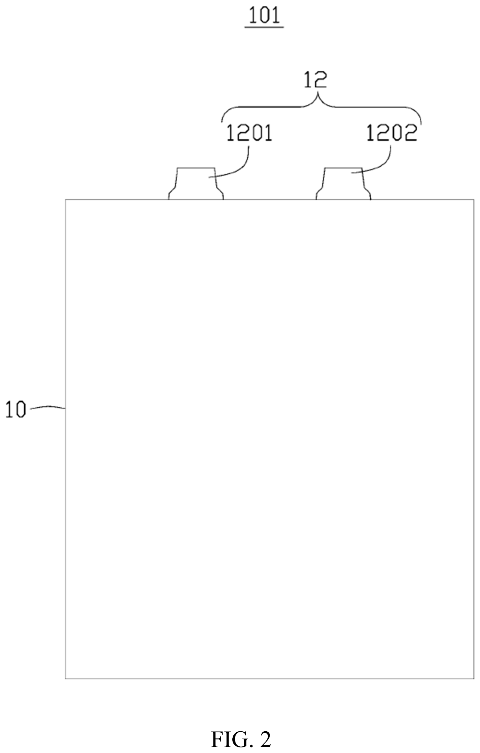

In some embodiments, referring to FIG. 2, the electrochemical device 100 includes an electrode assembly 101. The electrode assembly 101 includes an electrode plate 10. The electrode plate 10 includes a positive electrode plate and a negative electrode plate.

In some embodiments, the electrode assembly 101 further includes a separator (not shown in the figure). The separator is disposed between the positive electrode plate and the negative electrode plate, and is configured to isolate the positive electrode plate from the negative electrode plate.

In some embodiments, the separator may be made of materials such as polyethylene (PE) or polypropylene (PP).

The electrode assembly 101 may be a wound structure or a stacked structure. When the electrode assembly 101 is a wound structure, the positive electrode plate may include a plurality of positive tabs 1201, and the negative electrode plate may include a plurality of negative tabs 1202. After being wound, when viewed along a thickness direction of the electrode assembly 101, the plurality of positive tabs 1201 may overlap each other, and the plurality of negative tabs 1202 may also overlap each other. When the electrode assembly 101 is a stacked structure, the electrode assembly 101 includes a plurality of positive electrode plates and a plurality of negative electrode plates. Each positive electrode plate includes at least one positive tab 1201. Each negative electrode plate includes at least one negative tab 1202. When viewed along the thickness direction of the electrode assembly 101, the positive tabs 1201 of the plurality of positive electrode plates may overlap each other, and the negative tabs 1202 of the plurality of negative electrode plates may also overlap each other.

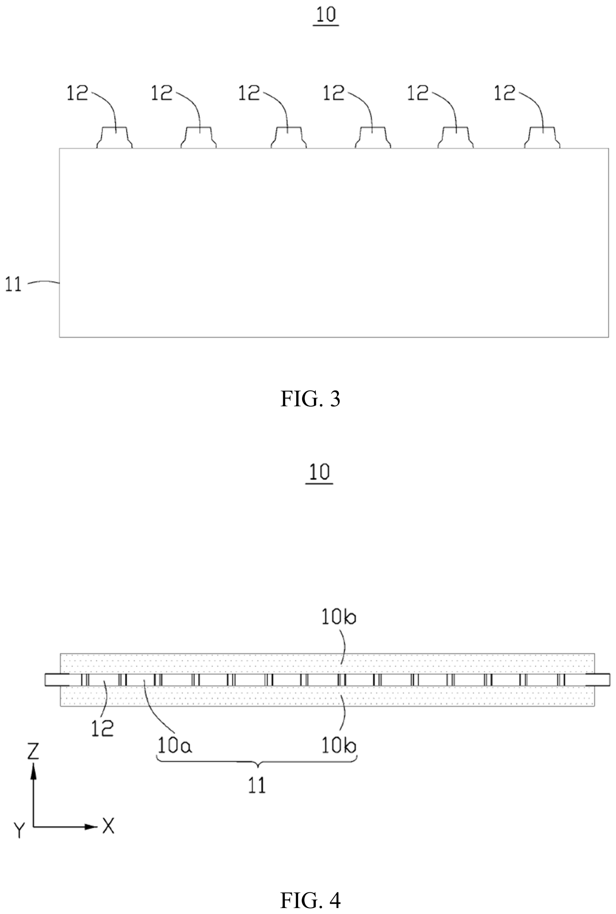

In some embodiments, referring to FIG. 3 and FIG. 4, an electrode plate 10 includes a base portion 11. The base portion 11 includes a current collector 10a and a first active material layer 10b. The first active material layer 10b is disposed on a surface of the current collector 10a. The electrode plate 10 may be a positive electrode plate or a negative electrode plate. The positive electrode plate includes a positive current collector and a positive active material layer. The positive current collector may be a metal layer containing at least one of aluminum, nickel, tantalum, titanium, or the like, such as aluminum foil. The positive active material layer includes a positive active material. The positive active material may include at least one of lithium cobalt oxide, lithium nickel cobalt manganese oxide, lithium nickel cobalt aluminum oxide, lithium iron phosphate, lithium manganese iron phosphate, lithium manganese oxide, or the like. The negative electrode plate 10 includes a negative current collector and a negative active material layer. The negative current collector may be a metal layer containing at least one of copper, nickel, tantalum, titanium, or the like, such as copper foil. The negative active material layer includes a negative active material. The negative active material may include at least one of graphite, hard carbon, soft carbon, silicon, a silicon-oxygen material, a silicon-carbon material, or the like.

In some embodiments, referring to FIG. 3 to FIG. 5, the electrode plate 10 includes a base portion 11 and a tab 12 connected to each other. The tab 12 includes an extension portion 121 and a connecting portion 122. The connecting portion 122 is located between the extension portion 121 and the base portion 11, and the connecting portion 122 connects the extension portion 121 and the base portion 11.

It is noted that the connecting portion 122 is connected to the current collector 10a in the base portion 11, and the tab 12 may be formed integrally with the current collector 10a by cutting. Along the width direction Y of the electrode plate 10, the tab 12 is located on one side of the base portion 11.

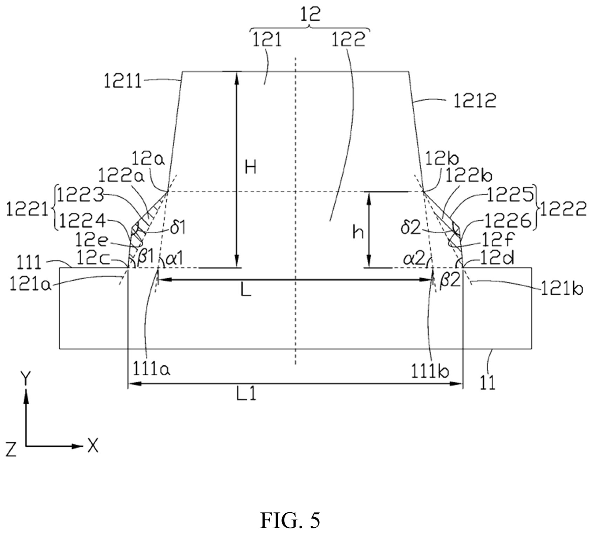

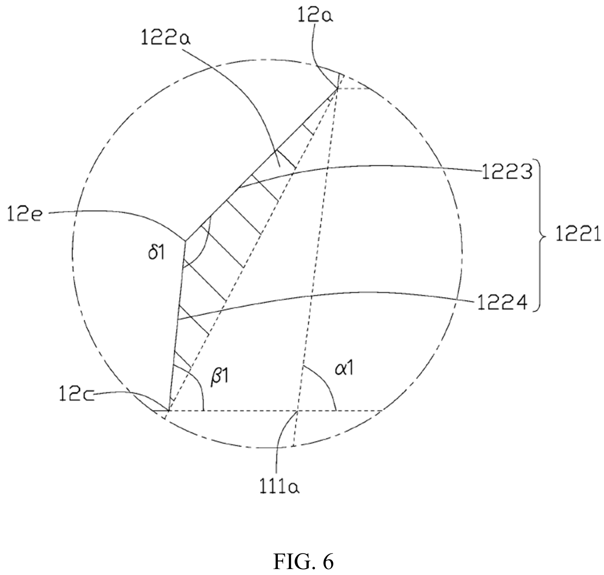

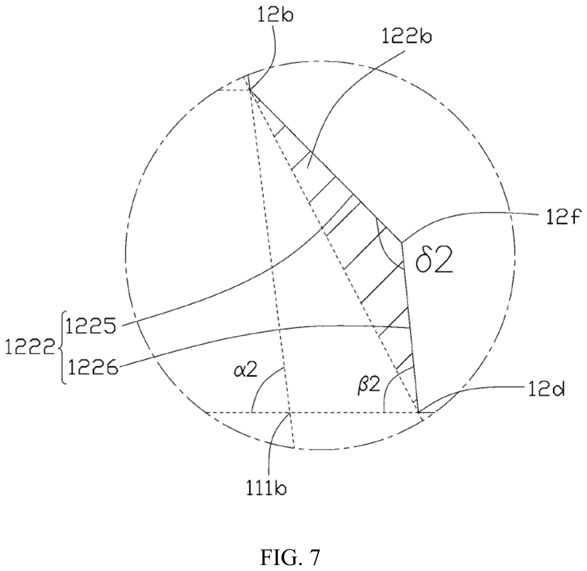

In some embodiments, referring to FIG. 5 to FIG. 7, along a length direction X of the electrode plate 10, the base portion 11 includes a first edge 111 connected to the tab 12. Along the length direction X of the electrode plate 10, the extension portion 121 includes a first side edge 1211 and a second side edge 1212 disposed opposite to each other, and the connecting portion 122 includes a third side edge 1221 and a fourth side edge 1222 disposed opposite to each other. The third side edge 1221 is connected to the first edge 111 and the first side edge 1211. The fourth side edge 1222 is connected to the first edge 111 and the second side edge 1212. A first connection point 12a is formed between the third side edge 1221 and the first side edge 1211. A second connection point 12b is formed between the fourth side edge 1222 and the second side edge 1212. A third connection point 12c is formed between the third side edge 1221 and the first edge 111. A fourth connection point 12d is formed between the fourth side edge 1222 and the first edge 111. When viewed along a thickness direction Z of the tab 12, an extension line of the first side edge 1211 intersects the first edge 111 at a first intersection point 111a. The first intersection point 111a is located between the third connection point 12c and the fourth connection point 12d. An angle between a ray from the first intersection point 111a to the first connection point 12a and a ray from the first intersection point 111a to the fourth connection point 12d is α₁, satisfying: α₁ < 90°. When viewed along the thickness direction Z of the tab 12, with a line of connection from the first connection point 12a to the third connection point 12c serving as a first reference line 121a, the connecting portion 122 includes a first reinforcing region 122a. The first reinforcing region 122a is defined by the third side edge 1221 and the first reference line 121a.

The inventor of this application finds through research that the tab 12 is prone to swing or twist under stress during production processes such as tab cutting and forming and electrode plate 10 winding. In the case of swinging or twisting, the tab 12 is prone to bending, inward insertion (causing contact with an electrode plate 10 of a different polarity), and other phenomena, thereby severely affecting the production yield rate. In addition, the electrochemical device 100 with a multi-tab 12 structure poses higher risk of tearing the tab 12 during an impact caused by factors such as dropping, thereby affecting the normal use of the electrical device 1000. By setting the angle to satisfy α₁ < 90°, this application makes the first side edge 1211 of the tab 12 to be tilted. By disposing the first reinforcing region 122a between the third side edge 1221 and the first reference line 121a, the first-side swing stiffness and torsional stiffness of the tab 12 are improved, thereby suppressing the bending and inward insertion of the tab 12 during production and winding, improving the production yield rate of the electrochemical device 100, and also reducing the risk of tearing the tab at the root of the tab 12 during an impact caused by factors such as dropping of the electrochemical device 100, and consequently improving the reliability of the electrochemical device 100 in use.

Understandably, the first intersection point 111a formed between the extension line of the first side edge 1211 and the first edge 111 can be understood as an intersection point between the extension line of the first side edge 1211 and a straight line on which the first edge 111 lies. The first side is a side of the tab 12, the side on which the first side edge 1211 is provided. In some embodiments, α₁ ≤ 85°. As an example, α₁ may be any one of 85°, 80°, 70°, 60°, 50°, 45°, or a range formed by any two thereof.

In some embodiments, referring to FIG. 5 to FIG. 7, along the width direction Y of the electrode plate 10, a projection of the extension portion 121 lies within a projection of the connecting portion 122, thereby causing the dimension of the connecting portion 122 in the length direction X of the electrode plate 10 to be larger than the dimension of the extension portion 121 in the length direction X of the electrode plate 10, and consequently improving the stiffness of the tab 12 and reducing the probability of bending or tearing of the tab 12.

In some embodiments, referring to FIG. 5 to FIG. 7, when viewed along a thickness direction Z of the tab 12, an extension line of the second side edge 1212 intersects the first edge 111 at a second intersection point 111b. The second intersection point 111b is located between the third connection point 12c and the fourth connection point 12d. An angle between a ray from the second intersection point 111b to the second connection point 12b and a ray from the second intersection point 111b to the third connection point 12c is α₂, satisfying: α₂ < 90°. When viewed along the thickness direction Z of the tab 12, a line connecting the second connection point 12b to the fourth connection point 12d is a second reference line 121b. The connecting portion 122 further includes a main region and a second reinforcing region 122b. The main region is located between the first reference line 121a and the second reference line 121b. The second reinforcing region 122b is defined by the fourth side edge 1222 and the second reference line 121b. By setting the angle to satisfy α₂ < 90°, the second side edge 1212 of the tab 12 is tilted. By disposing the second reinforcing region 122b between the fourth side edge 1222 and the second reference line 121b, the second-side swing stiffness and torsional stiffness of the tab 12 are improved, thereby further suppressing the bending and inward insertion of the tab 12 during production and winding, thereby improving the production yield rate of the electrochemical device 100, and also reducing the risk of tearing the tab at the root of the tab 12 during an impact caused by factors such as dropping of the electrochemical device 100, and consequently further improving the reliability of the electrochemical device 100 in use.

Understandably, the second intersection point 111b formed between the extension line of the second side edge 1212 and the first edge 111 can be understood as an intersection point between the extension line of the second side edge 1212 and a straight line on which the first edge 111 lies. The second side is a side of the tab 12, the side on which the second side edge 1212 is provided. In some embodiments, α₂ ≤ 85°. As an example, α₂ may be any one of 85°, 80°, 70°, 60°, 50°, 45°, or a range formed by any two thereof.

In some embodiments, the first side edge 1211 and the second side edge 1212 may be rectilinear or arcuate. When the first side edge 1211 and the second side edge 1212 are rectilinear, the extension lines of the first side edge 1211 and the second side edge 1212 are straight lines. When the first side edge 1211 and the second side edge 1212 are arcuate, the extension lines of the first side edge 1211 and the second side edge 1212 are a tangent line of the first side edge 1211 at the first intersection point 111a and a tangent line of the second side edge 1212 at the second intersection point 111b.

In some embodiments, referring to FIG. 5 to FIG. 7, the third side edge 1221 includes a fifth side edge 1223 and a sixth side edge 1224 connected to each other. The fifth side edge 1223 is connected to the first side edge 1211. The sixth side edge 1224 is connected to the first edge 111. An angle between the fifth side edge 1223 and the sixth side edge 1224 is δ₁, satisfying 90° < δ₁ < 180°. When this condition is satisfied, the outer contour of the first reinforcing region 122a assumes an obtuse-angle structure, thereby improving the swing stiffness and torsional stiffness of the tab 12, further suppressing the bending and inward insertion of the tab 12 during production and winding, improving the production yield rate of the electrochemical device 100, further reducing the risk of tearing the tab at the root of the tab 12 during an impact caused by factors such as dropping of the electrochemical device 100, and improving the reliability of the electrochemical device 100 in use.

As an example, δ₁ may be any one of 100°, 110°, 120°, 130°, 140°, 150°, or a range formed by any two thereof.

In some embodiments, referring to FIG. 5 to FIG. 7, the electrode plate satisfies: 180° - α₁ < δ₁. When this condition is satisfied, the obtuse angle of the outer contour of the first reinforcing region 122a is enlarged, thereby further improving the swing stiffness and torsional stiffness of the tab 12, and consequently suppressing the bending and tearing of the tab 12.

In some embodiments, referring to FIG. 5 to FIG. 7, the third side edge 1221 includes a fifth side edge 1223 and a sixth side edge 1224 connected to each other. A fifth connection point 12e is formed between the fifth side edge 1223 and the sixth side edge 1224. The fifth side edge 1223 is connected to the first side edge 1211. The sixth side edge 1224 is connected to the first edge 111. An angle between a ray from the third connection point 12c to the fifth connection point 12e and a ray from the third connection point 12c to the fourth connection point 12d is β₁, satisfying β₁ ≤ α₁ < 90°, and/or 60° ≤ β₁ ≤ 90°. When this condition is satisfied, the stiffness of the connecting portion 122 of the tab 12 is improved, and the swing and torsion of the tab 12 are suppressed more effectively, thereby improving the production yield rate of the electrochemical device 100, reducing the risk of tearing the tab at the root of the tab 12 during an impact caused by factors such as dropping of the electrochemical device 100, and improving the reliability of the electrochemical device 100 in use.

As an example, β₁ may be any one of 60°, 70°, 80°, 85°, 90°, or a range formed by any two thereof.

In some embodiments, referring to FIG. 5 to FIG. 7, the fourth side edge 1222 includes a seventh side edge 1225 and an eighth side edge 1226. A sixth connection point 12f is formed between the seventh side edge 1225 and the eighth side edge 1226. The seventh side edge 1225 is connected to the second side edge 1212. The eighth side edge 1226 is connected to the first edge 111. An angle between the seventh side edge 1225 and the eighth side edge 1226 is δ₂, satisfying: 90° < δ₂ < 180°. When this condition is satisfied, the outer contour of the second reinforcing region 122b assumes an obtuse-angle structure, thereby improving the swing stiffness and torsional stiffness of the tab 12, further suppressing the bending and inward insertion of the tab 12 during production and winding, improving the production yield rate of the electrochemical device 100, further reducing the risk of tearing the tab at the root of the tab 12 during an impact caused by factors such as dropping of the electrochemical device 100, and improving the reliability of the electrochemical device 100 in use.

As an example, δ₂ may be any one of 100°, 110°, 120°, 130°, 140°, 150°, or a range formed by any two thereof.

In some embodiments, referring to FIG. 5 to FIG. 7, an angle between a ray from the fourth connection point 12d to the sixth connection point 12f and a ray from the fourth connection point 12d to the third connection point 12c is β₂, satisfying: β₂ ≤ α₂ < 90°, and/or 60° ≤ β₂ ≤ 90°. When this condition is satisfied, the stiffness of the connecting portion 122 of the tab 12 is improved, and the swing and torsion of the tab 12 are suppressed more effectively, thereby improving the production yield rate of the electrochemical device 100, reducing the risk of tearing the tab at the root of the tab 12 during an impact caused by factors such as dropping of the electrochemical device 100, and improving the reliability of the electrochemical device 100 in use.

As an example, β₂ may be any one of 60°, 70°, 80°, 85°, 90°, or a range formed by any two thereof.

In some embodiments, referring to FIG. 5 to FIG. 7, the electrode plate satisfies: 180° - α₂ < δ₂. When this condition is satisfied, the obtuse angle of the outer contour of the second reinforcing region 122b is enlarged, thereby further improving the swing stiffness and torsional stiffness of the tab 12, and consequently suppressing the bending and tearing of the tab 12.

In some embodiments, referring to FIG. 5 to FIG. 7, a distance between the first intersection point 111a and the second intersection point 111b is L, and a distance between the third connection point 12c and the fourth connection point 12d is L₁, satisfying: L₁ ≥ 1.1 × L. When this condition is satisfied, the stiffness of the connecting portion 122 of the tab 12 is improved, and the swing and torsion of the tab are suppressed, thereby improving the production yield rate of the electrochemical device 100, reducing the risk of tearing the tab at the root of the tab 12 during an impact caused by factors such as dropping of the electrochemical device 100, and improving the reliability of the electrochemical device 100 in use.

As an example, L₁ may be any one of 1.1L, 1.2L, 1.3L, 1.4L, 1.5L, or a range formed by any two thereof.

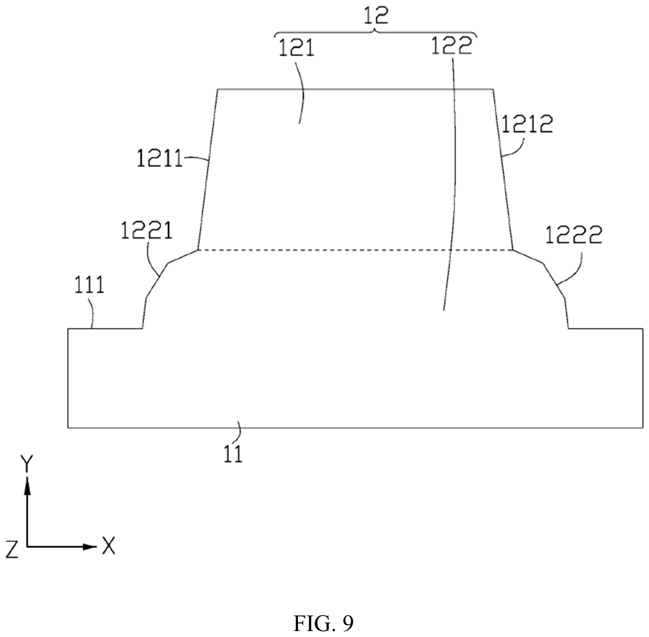

In some embodiments, referring to FIG. 5 and FIG. 9, the third side edge 1221 includes a fold line. The fold line may be a double fold line or a triple fold line. As an example, the third side edge 1221 includes a fifth side edge 1223 and a sixth side edge 1224 connected to each other. The fifth side edge 1223 is connected to the first side edge 1211. The sixth side edge 1224 is connected to the first edge 111. An angle δ₁ is formed between the fifth side edge 1223 and the sixth side edge 1224, so that the fifth side edge 1223 and the sixth side edge 1224 form a double fold line structure. The structure of the triple fold line of the third side edge 1221 will not be repeated here. Both the double fold line structure and the triple fold line structure of the third side edge 1221 can improve the swing stiffness and torsional stiffness of the tab 12, thereby suppressing the bending and tearing of the tab 12.

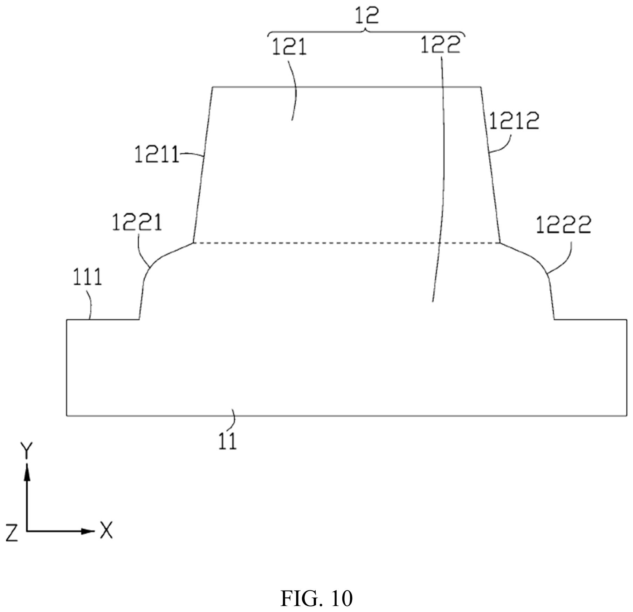

In some embodiments, referring to FIG. 10, the third side edge 1221 includes an arc line. In other words, the outer contour of the third side edge 1221 is arcuate. The arcuate structure improves the swing stiffness and torsional stiffness of the tab 12, thereby suppressing the bending and tearing of the tab 12.

In some embodiments, referring to FIG. 5 and FIG. 9, the fourth side edge 1222 includes a fold line that may be a double fold line or a triple fold line. As an example, the fourth side edge 1222 includes a seventh side edge 1225 and an eighth side edge 1226. A sixth connection point 12f is formed between the seventh side edge 1225 and the eighth side edge 1226. The seventh side edge 1225 is connected to the second side edge 1212. The eighth side edge 1226 is connected to the first edge 111. An angle δ₂ is formed between the seventh side edge 1225 and the eighth side edge 1226, thereby forming a double fold line structure from the seventh side edge 1225 and the eighth side edge 1226. The structure of the triple fold line of the fourth side edge 1222 will not be repeated here. Both the double fold line structure and the triple fold line structure of the fourth side edge 1222 can improve the swing stiffness and torsional stiffness of the tab 12, thereby suppressing the bending and tearing of the tab 12.

In some embodiments, referring to FIG. 10, the fourth side edge 1222 includes an arc line. In other words, the outer contour of the fourth side edge 1222 is arcuate. The arcuate structure improves the swing stiffness and torsional stiffness of the tab 12, thereby suppressing the bending and tearing of the tab 12.

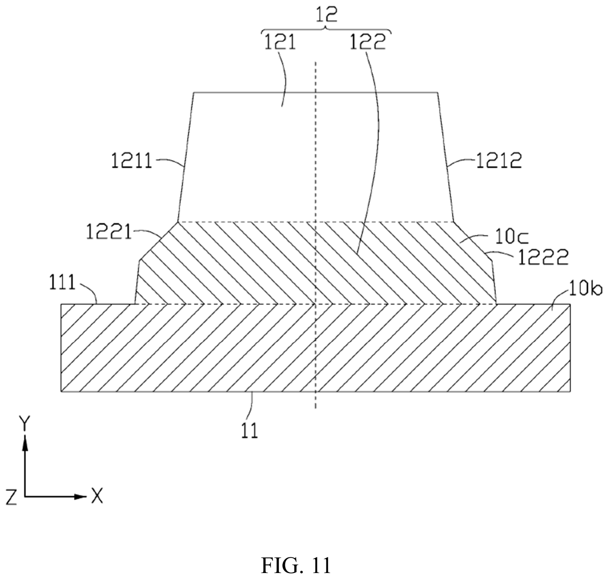

In some embodiments, referring to FIG. 3 and FIG. 11, the electrode plate 10 further includes a second active material layer 10c. The second active material layer 10c is disposed on a surface of the connecting portion 122. The second active material layer 10c disposed on the surface of the connecting portion 122 makes it convenient for the second active material layer 10c to share the stress transmitted to the tab 12, thereby increasing the stiffness of the connecting portion 122 of the tab 12 and further suppressing the bending or tearing of the tab 12.

Understandably, the second active material layer 10c may be disposed on a partial surface of the connecting portion 122, such as the surface of the first region in the connecting portion 122, the first region being adjacent to the base portion 11, or may be disposed on the entire surface of the connecting portion 122, which is not specifically limited here.

In some embodiments, the electrode plate 10 is a negative electrode plate. In this case, both the first active material layer 10b and the second active material layer 10c are negative active material layers. The specific components thereof are the same as those of the above negative active material layer, and will not be repeated here.

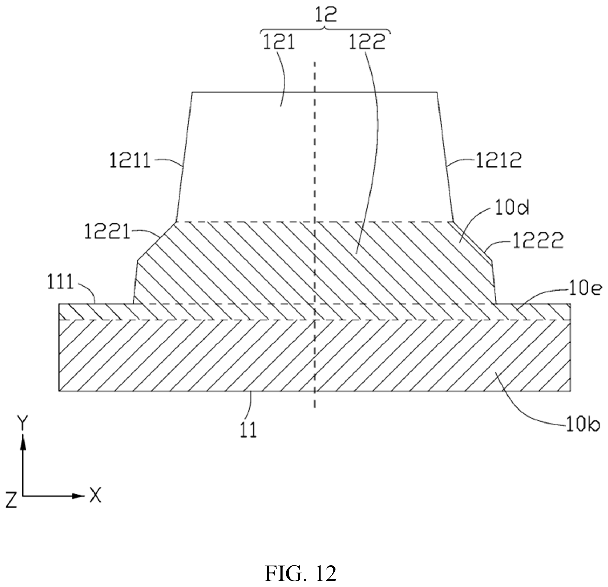

In some embodiments, referring to FIG. 12, the electrode plate 10 further includes a first insulation layer 10d. The first insulation layer 10d is disposed on a surface of the connecting portion 122. The first insulation layer 10d disposed on the surface of the connecting portion 122 makes it convenient for the first insulation layer 10d to share the stress transmitted to the tab 12, thereby increasing the stiffness of the connecting portion 122 of the tab 12 and further suppressing the bending or tearing of the tab 12. Understandably, the first insulation layer 10d may be disposed on a partial surface of the connecting portion 122, such as the surface of the second region in the connecting portion 122, the second region being adjacent to the base portion 11, or may be disposed on the entire surface of the connecting portion 122, which is not specifically limited here.

In some embodiments, the electrode plate 10 is a positive electrode plate. On a side adjacent to the tab 12, the current collector 10a includes a third region. The electrode plate 10 further includes a second insulation layer 10e. The second insulation layer 10e is disposed on a surface of the third region. Understandably, the second insulation layer 10e may be connected to the first insulation layer 10d.

In some embodiments, the components of the first insulation layer 10d and the second insulation layer 10e may include inorganic particles and a binder. The components of the first insulation layer 10d may be the same as or different from the components of the second insulation layer 10e, which is not specifically limited here.

It is noted that the intersection points and the connection points on the outer contour in the electrode plate 10 of this application may be chamfered or filleted, which is not specifically limited here.

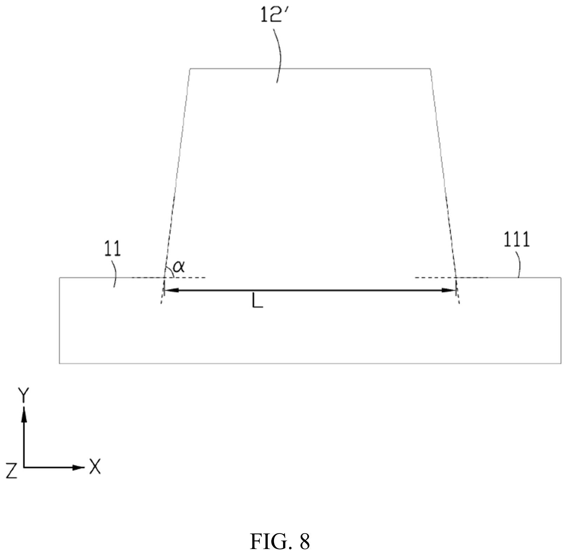

To verify the effect of the structure of the electrode plate 10 of this application in alleviating the bending of the tab 12, an effect comparison test on the production yield rate improvement is performed using a multi-tab 12 large pouch battery as an example. Each set of data is obtained by testing 400 electrode assemblies 101. Each electrode assembly 101 includes 98 die-cut tabs 12. The number of electrode assemblies 101 that incurs tab 12 folding during winding is counted. The electrode plate in the comparative embodiment is shown in FIG. 8, and includes a trapezoidal tab 12'. Of the trapezoidal tab 12, the bottom edge width L is 45 mm, the slope angle α is 80°, and the height H is 24 mm. The tabs 12 in the embodiment is further provided with a reinforcing region on the basis of the comparative embodiment. The tab 12 satisfies: α₁ = α₂ = α = 80°. The bottom edge width L₁ of the tab 12, the angle δ₁/δ₂, the angle B₁/B₂, and the height h of the connecting portion 122 are adjusted. The test results are shown in Table 1 below:

**Table 1 Test data of tab 12 of this application versus trapezoidal tab 12'**

| Group | Bottom edge width Li of tab | Angle δ₁/δ₂ | Angle β₁/β₂ | h/H | Number of samples | Proportion of electrode assemblies with folded tabs (%) |
|---|---|---|---|---|---|---|
| Comparative Embodiment | L | - | - | - | 400 | 4 |
| Embodiment 1-1 | 1.1L | 120° | 80° | 1/3 | 400 | 1.5 |
| Embodiment 1-2 | 1.2L | 120° | 80° | 1/3 | 400 | 0 |
| Embodiment 1-3 | 1.3L | 120° | 80° | 1/3 | 400 | 0 |
| Embodiment 1-4 | 1.4L | 120° | 80° | 1/3 | 400 | 0.5 |
| Embodiment 1-5 | 1.5L | 120° | 80° | 1/3 | 400 | 0.5 |
| Embodiment 2-1 | 1.2L | 120° | 60° | 1/3 | 400 | 0 |
| Embodiment 2-2 | 1.2L | 120° | 70° | 1/3 | 400 | 0 |
| Embodiment 2-3 | 1.2L | 120° | 90° | 1/3 | 400 | 1 |
| Embodiment 3-1 | 1.2L | 100° | 80° | 1/3 | 400 | 1 |
| Embodiment 3-2 | 1.2L | 110° | 80° | 1/3 | 400 | 0.5 |
| Embodiment 3-3 | 1.2L | 130° | 80° | 1/3 | 400 | 0 |
| Embodiment 3-4 | 1.2L | 140° | 80° | 1/3 | 400 | 0.5 |
| Embodiment 4-1 | 1.2L | 120° | 80° | 1/5 | 400 | 2 |
| Embodiment 4-2 | 1.2L | 120° | 80° | 1/4 | 400 | 1 |
| Embodiment 4-3 | 1.2L | 120° | 80° | 1/2 | 400 | 0 |

As can be seen from comparison between the embodiments and the comparative embodiment in Table 1, by adopting the structure of the electrode plate 10 in an embodiment of this application, the proportion of electrode assemblies 101 with folded tabs 12 can be significantly reduced, thereby improving the production yield rate of the electrochemical device 100. In addition, the swing stiffness and torsional stiffness of the tab 12 are improved, thereby reducing the risk of tearing the tab at the root of the tab 12 during an impact caused by factors such as dropping of the electrochemical device 100, and consequently improving the reliability of the electrochemical device 100 in use.

As can be seen from Embodiment 1-2 versus Embodiments 2-1 to 2-3, when the tab further satisfies β₁ ≤ α₁ < 90° or β₂ ≤ α₂ < 90°, the stiffness of the connecting portion 122 of the tab 12 is further improved, and the swing and torsion of the tab 12 are suppressed more effectively, thereby further improving the production yield rate of the electrochemical device 100, also further reducing the risk of tearing the tab at the root of the tab 12 during an impact caused by factors such as dropping of the electrochemical device 100, and improving the reliability of the electrochemical device 100 in use.

In addition, a person of ordinary skill in the art is aware that the above embodiments are merely intended to illustrate this application, but not intended to limit this application. Any modifications, equivalent substitutions, improvements, and the like made without departing from the essence and principles of this application still fall within the protection scope of this application.

## Claims

1. An electrode plate, comprising a base portion and a tab, wherein, along a length direction of the electrode plate, the base portion comprises a first edge connected to the tab, **characterized in that**, the tab comprises:
an extension portion, wherein, along the length direction of the electrode plate, the extension portion comprises a first side edge and a second side edge disposed opposite to each other;
a connecting portion, wherein the connecting portion is located between the base portion and the extension portion; along the length direction of the electrode plate, the connecting portion comprises a third side edge and a fourth side edge disposed opposite to each other; the third side edge is connected to the first edge and the first side edge; the fourth side edge is connected to the first edge and the second side edge; a first connection point is formed between the third side edge and the first side edge; a second connection point is formed between the fourth side edge and the second side edge; a third connection point is formed between the third side edge and the first edge; and a fourth connection point is formed between the fourth side edge and the first edge;
when viewed along a thickness direction of the tab, an extension line of the first side edge intersects the first edge at a first intersection point; the first intersection point is located between the third connection point and the fourth connection point; an angle between a ray from the first intersection point to the first connection point and a ray from the first intersection point to the fourth connection point is α₁, satisfying: α₁ < 90 °; and
when viewed along the thickness direction of the tab, with a line of connection from the first connection point to the third connection point serving as a first reference line, the connecting portion comprises a first reinforcing region, and the first reinforcing region is defined by the third side edge and the first reference line.

2. The electrode plate according to claim 1, **characterized in that**, the third side edge comprises a fifth side edge and a sixth side edge, the fifth side edge is connected to the first side edge, the sixth side edge is connected to the first edge, and an angle between the fifth side edge and the sixth side edge is δ₁, satisfying 90° < δ₁ < 180°.

3. The electrode plate according to claim 2, **characterized in that**, the electrode plate satisfies: 180° - α₁ < δ₁.

4. The electrode plate according to claim 1, **characterized in that**, the electrode plate satisfies at least one of the following conditions:
(1) the third side edge comprises a fifth side edge and a sixth side edge, a fifth connection point is formed between the fifth side edge and the sixth side edge, the fifth side edge is connected to the first side edge, the sixth side edge is connected to the first edge, and an angle between a ray from the third connection point to the fifth connection point and a ray from the third connection point to the fourth connection point is β₁, satisfying β₁ ≤ α₁ < 90°, and/or 60° ≤ β₁ ≤ 90°; or
(2) along a width direction of the electrode plate, a height of the tab is H, and a height of the connecting portion is h, satisfying: h/H ≥ 1/5.

5. The electrode plate according to claim 1, **characterized in that**, when viewed along the thickness direction of the tab, an extension line of the second side edge intersects the first edge at a second intersection point; the second intersection point is located between the third connection point and the fourth connection point; and an angle between a ray from the second intersection point to the second connection point and a ray from the second intersection point to the third connection point is a₂, satisfying: α₂ < 90°; and
when viewed along the thickness direction of the tab, with a line of connection from the second connection point to the fourth connection point serving as a second reference line, the connecting portion further comprises a main region and a second reinforcing region, the main region is located between the first reference line and the second reference line, and the second reinforcing region is defined by the fourth side edge and the second reference line.

6. The electrode plate according to claim 5, **characterized in that**, the fourth side edge comprises a seventh side edge and an eighth side edge, a sixth connection point is formed between the seventh side edge and the eighth side edge, the seventh side edge is connected to the second side edge, and the eighth side edge is connected to the first edge, satisfying at least one of the following conditions:
(1) an angle between the seventh side edge and the eighth side edge is δ₂, satisfying: 90° < δ₂ < 180°;
(2) an angle between a ray from the fourth connection point to the sixth connection point and a ray from the fourth connection point to the third connection point is β₂, satisfying: β₂ ≤ α₂ < 90°, and/or 60° ≤ β₂ ≤ 90°; or
(3) a distance between the first intersection point and the second intersection point is L, and a distance between the third connection point and the fourth connection point is L₁, satisfying: L₁ ≥ 1.1 × L.

7. The electrode plate according to claim 6, **characterized in that**, the electrode plate satisfies: 180° - α₂ < δ₂.

8. The electrode plate according to claim 1, **characterized in that**, the electrode plate satisfies at least one of the following conditions:
(1) the third side edge comprises at least one of a fold line or an arc line;
(2) the fourth side edge comprises at least one of a fold line or an arc line;
(3) the base portion comprises a current collector and a first active material layer, and the first active material layer is disposed on a surface of the current collector; or
(4) the electrode plate is a negative electrode plate, the negative electrode plate further comprises a second active material layer, and the second active material layer is disposed on a surface of the connecting portion; or, the electrode plate is a positive electrode plate, the positive electrode plate further comprises a first insulation layer, and the first insulation layer is disposed on a surface of the connecting portion.

9. An electrochemical device, **characterized in that**, the electrochemical device comprises a wound type electrode assembly, and the electrode assembly comprises the electrode plate according to any one of claims 1 to 8.

10. An electrical device, **characterized in that**, the electrical device comprises the electrochemical device according to claim 9.
